# EUROPÄISCHE PATENTSCHRIFT

(11) **EP 2 243 947 B1**
(45) Veröffentlichungstag und Bekanntmachung des Hinweises auf die Patenterteilung: **04.07.2012**
(21) Anmeldenummer: 10159579.1
(22) Anmeldetag: 12.04.2010
(51) Int. Cl.: F02M 25/07

(54) **Saugmodul mit integrierter Abgasrückführung**
Intake module with integrated exhaust gas recirculation
Module d'aspiration doté d'une recirculation de gaz d'échappement intégrée

(30) Priorität: 18.04.2009 DE 102009018031; 23.04.2009 DE 102009018378
(43) Veröffentlichungstag der Anmeldung: 27.10.2010
(73) Patentinhaber: Mahle International GmbH, 70376 Stuttgart (DE)
(72) Erfinder: Bruggesser, Veit, 71157 Hildrizhausen (DE); Drespling, Hans-Peter, 89522 Heidenheim (DE); Fischer, Oliver, 71384 Weinstadt (DE)
(74) Vertreter: BRP Renaud & Partner

(56) Entgegenhaltungen:
- EP-A1- 0 869 274
- EP-A2- 1 020 635
- DE-A1- 4 338 194
- DE-A1- 10 202 612

## Beschreibung

Die vorliegende Erfindung betrifft ein Saugmodul mit integrierter Abgasrückführung einer Brennkraftmaschine, vorzugsweise eines Kraftfahrzeugs. Die Erfindung betrifft außerdem ein Verfahren zur Montage / Herstellung eines derartigen Saugmoduls.

Abgasrückführung ist ein bekanntes Prinzip zur Minderung von Stickoxiden, welche bei der Verbrennung von Kraftstoff in Verbrennungsmotoren entstehen. Die Minderung ist nötig, um die vorgeschriebenen Emissionsgrenzwerte einhalten zu können. Da bei der Abgasrückführung in einen Frischluftkanal, dass heißt in einen Ansaugkanal der Brennkraftmaschine, oftmals hohe Temperaturen des rückgeführten Abgases auftreten, ist es bisher erforderlich, insbesondere eine Verbindungsstelle zwischen dem Abgasrückführkanal und dem Frischluftkanal mittels eines metallischen, insbesondere aus Aluminium ausgebildeten Gehäuses zu realisieren, welches einerseits konstruktiv aufwendig und andererseits teuer herzustellen ist. Desweiteren weisen derartige Aluminiumgehäuse den Nachteil einer aufwendigen Montage bzw. Demontage auf und sind deutlich schwerer als ein in eine Kunststoffluftführung integriertes AGR-System.

Aus der EP 0 869 274 A1 ist ein Saugmodul mit einer Sauganlage, umfassend einen aus Kunststoff ausgebildeten Frischluftkanal 13 und eine ebenfalls aus Kunststoff ausgebildete Kopplungseinrichtung 10 bekannt. Über die Kopplungseinrichtung 10 ist ein Abgoskanal 21, 15 kommunizierend mit dem Frischluftkanal 13 verbunden. Die Kopplungseinrichtung 10 ist dabei zur Aufnahme eines Abgasrückführventils 30 ausgebildet, wobei der Abgaskanal 15 und 21 derart mit der Kopplungseinrichtung 10 verbunden ist, dass eine Wärmeübertragung zumindest erschwert ist.

Aus der DE 43 38 194 A1 ist ein Luftansaugkanalsystem für Brennkraftmaschinen mit sich auf unterschiedlichen Ebenen kreuzenden Kanälen, insbesondere einem Luftansaugkanal und einem Abgasrückführkanal, bekannt.

Aus der DE 102 02 612 A1 ist wiederum eine Abgasrückführvorrichtung für ein Luftansaugmodul bekannt. Schließlich ist aus der EP 1 020635 A2 ein Brennluftansaugrohrabschnitt mit einer Sauganlage bekannt, die einen Frischluftkanal und eine Kopplungseinrichtung umfasst sowie einen Abgaskanal und ein Abgasrückführventil, das an der Kopplungseinrichtung angebaut ist.

Die vorliegende Erfindung beschäftigt sich mit dem Problem, für ein Saugmodul eine verbesserte oder zumindest eine alternative Ausführungsform anzugeben, die sich insbesondere durch eine vereinfachte Montage bzw. Demontage und ein reduziertes Gewicht auszeichnet.

Erfindungsgemäß wird dieses Problem durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, eine Sauganlage aus Kunststoff mit integrierter Abgasrückführung, für eine Brennkraftmaschine auszubilden und dabei den zugehörigen Abgaskanal über eine Kopplungseinrichtung der Sauganlage mit dem Frischluftkanal derselben kommunizierend zu verbinden, wobei die Kopplungseinrichtung gleichzeitig zur Aufnahme eines Abgasrückführventils ausgebildet ist und wobei der Abgaskanal des Saugmoduls wärmeentkoppelt mit dem Frischluftkanal verbunden bzw. verbindbar ist, so dass eine insbesondere schadhafte Wärmeübertragung zwischen dem Abgaskanal und der aus Kunststoff ausgebildeten Sauganlage vermieden, zumindest aber erschwert werden kann. Die Sauganlage umfasst dabei den Frischluftkanal (Luftführung / Ladeluftführung) und die Kopplungseinrichtung und ist beispielsweise aus zwei oder mehr miteinander verschweißten Kunststoffschalen aufgebaut, kann aber auch einteilig z.B. als Kernausschmelzbauteil hergestellt sein. Die zuvor beschriebenen Komponenten sind dabei aus Kunststoff ausgebildet, während der ebenfalls zum Saugmodul gehörende Abgaskanal üblicherweise aus Metall besteht. Das so hergestellte Saugmodul weist somit einen Frischluftkanal und einen Abgaskanal auf, die über die aus Kunststoff ausgebildete Kopplungseinrichtung der Sauganlage kommunizierend miteinander verbunden sind. Neben der Verbindung der beiden Kanäle übernimmt die erfindungsgemäße Kopplungseinrichtung zusätzlich die Funktion das Abgasrückführventil, mittels welchem eine Dosierung des rückzuführenden Abgases erfolgt, zu integrieren. Um dabei eine Beschädigung der aus Kunststoff ausgebildeten Sauganlage durch die im Abgaskanal herrschenden hohen Temperaturen zuverlässig ausschließen zu können, ist der Abgaskanal Wärme entkoppelt mit der Kopplungseinrichtung der Sauganlage verbunden, so dass zumindest eine die Sauganlage schädigende Wärmeübertragung vom Abgaskanal auf die Kopplungseinrichtung zuverlässig vermieden werden kann. Generell kann mit dem erfindungsgemäßen Saugmodul eine bisher in diesem Bereich eingesetzte Kopplungseinrichtung aus teurem Aluminium eingespart werden, was zugleich den großen Vorteil bietet, dass sich die Montage deutlich vereinfacht. Zur Montage des erfindungsgemäßen Saugmoduls müssen nämlich nur noch der Abgaskanal von der einen Seite und das Abgasrückführventil von der entgegengesetzten Seite in die Kopplungseinrichtung eingesteckt und mit dieser verbunden werden. Gleichzeitig kann mit dem erfindungsgemäßen Saugmodul im Vergleich zu bisherigen metallischen Lösungen (in der Regel als Zwischenflansch ausgebildet), eine deutliche Gewichtsreduzierung erreicht werden, was sich insbesondere auf den Kraftstoffverbrauch und damit ebenfalls auf die Schadstoffemissionen auswirkt. Denkbar ist insbesondere, dass ein komplett vorgefertigtes Saugmodul, bestehend aus Sauganlage, Abgaskanal und Abgasrückführventil bereitgestellt werden kann.

Bei einer vorteilhaften Weiterbildung der erfindungsgemäßen Lösung, ist der Abgaskanal unter Bildung eines Ringspalts in die Kopplungseinrichtung der Sauganlage eingesteckt und über einen Kragen an dieser befestigt. Der vom Abgaskanal abstehende Kragen bietet somit eine weitere thermische Entkopplung zwischen dem Abgaskanal und der Kopplungseinrichtung, so dass ein Abgas führender Teil des Abgaskanals an keiner Stelle mit der aus Kunststoff ausgebildeten Kopplungseinrichtung der Sauganlage direkt in Berührung tritt. Zusätzlich ist zwischen der Kopplungseinrichtung und dem Kragen des Abgaskanals ein Dicht-/Abstandselement angeordnet, durch welches der Kragen des Abgaskanals und die Kopplungseinrichtung ohne direkten Kontakt aneinander befestigt werden, wodurch die Wärmeübertragung ebenfalls erschwert ist. Zwischen der Kopplungseinrichtung und dem Kragen des Abgaskanals befindet sich somit stets ein zumindest geringer Spalt, bei welchem die darin enthaltene Luft ebenfalls als Isolator wirkt. Durch die Bildung des Ringspalts zwischen der Kopplungseinrichtung und dem in diese eingesteckten Teil des Abgaskanals, kann eine zusätzliche Wärmeisolierung durch die dort vorhandene Luftschicht erreicht werden, so dass auch hier keine schädigende Wärmeübertragung vom Abgasrohr auf die Kopplungseinrichtung zu befürchten ist.

Bei einer vorteilhaften Weiterbildung der erfindungsgemäßen Lösung, ist dieser Ringspalt zum Frischluftkanal hin offen ausgebildet und somit durch diesen belüftet. Bereits eine stehende Luftschicht bietet eine hohe Isolationswirkung, wobei ein gemäß der Erfindung belüfteter, dass heißt durchströmter, Ringspalt eine nochmalige Herabsetzung der Wärmeübertragung zwischen dem Abgaskanal und der Kopplungseinrichtung bedeutet, wodurch die aus Kunststoff ausgebildete Kopplungseinrichtung in diesem Bereich problemlos, dass heißt insbesondere langfristig, eingesetzt werden kann.

Erfindungsgemäß weist der Abgaskanal in seinem in die Kopplungseinrichtung eingeschobenen Bereich eine Wandungsöffnung mit einem nach außen umgebogenen Kragen auf, der berührungslos zumindest teilweise in den Frischluftkanal eintaucht. Dabei ist der Kragen als Strömungsleitelement ausgebildet und lenkt einen Teil eines im Frischluftkanal strömenden Frischluftstroms in den Ringspalt zwischen der Kopplungseinrichtung und dem Abgaskanal um. Eine derartige Frischgasumlenkung bewirkt eine kontrollierte Belüftung des Ringspalts und damit eine Zwangskühlung desselben, wodurch ebenfalls eine schädliche Wärmeübertragung zwischen dem in die Kopplungseinrichtung eingreifenden Teil des Abgaskanals und der Kopplungseinrichtung zuverlässig vermieden werden kann. Gleichzeitig dient der Kragen dazu, das heiße Abgas vom Ringspalt fernzuhalten, denn dort soll, wenn möglich ausschließlich Frischgas zirkulieren, um einen Kühleffekt zu erreichen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch
- Fig. 1: ein erfindungsgemäßes Saugmodul in einer Schnittdarstellung,
- Fig. 2: eine Detailansicht einer Befestigung eines Abgaskanals an einer Kopplungseinrichtung einer Sauganlage,
- Fig. 3: eine Schnittdarstellung in einem Verbindungsbereich zwischen einem Frischluftkanal und dem Abgaskanal.

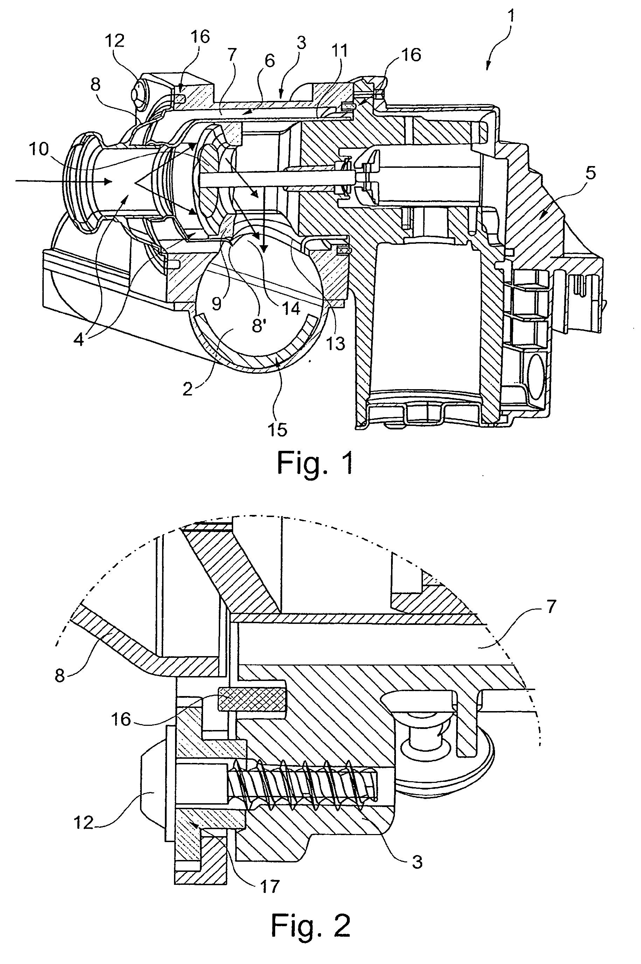

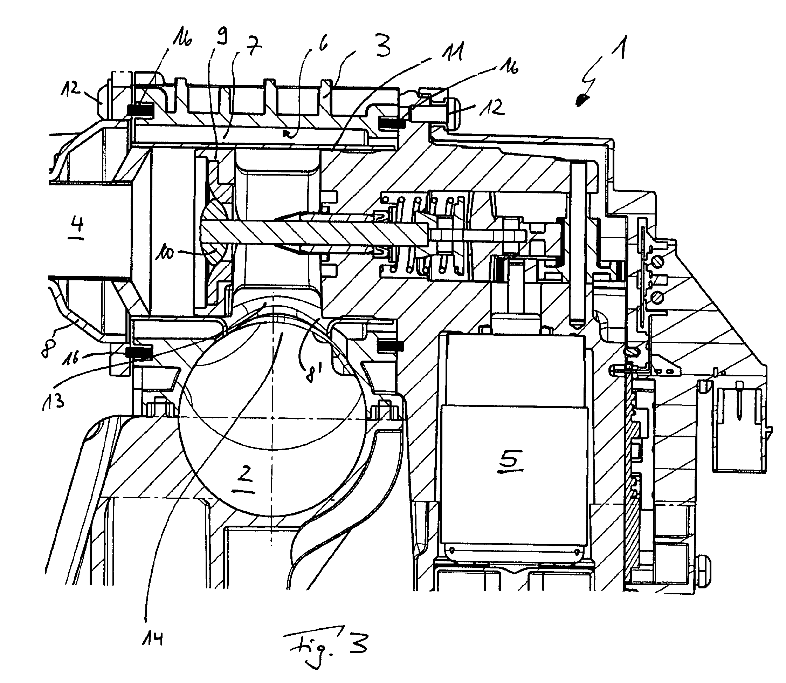

Entsprechend den Fig. 1 und 3, weist ein erfindungsgemäßes Saugmodul 1 einer im übrigen nicht gezeigten Brennkraftmaschine, vorzugsweise in einem Kraftfahrzeug, eine aus einem Frischluftkanal 2 sowie einer Kopplungseinrichtung 3 bestehende Sauganlage auf, über die ein Abgaskanal 4 befestigt ist. Im Bereich der Kopplungseinrichtung 3, welche erfindungsgemäß aus Kunststoff, insbesondere aus einem Polyamid (PA) oder Polypropylen (PP), ausgebildet ist, erfolgt somit eine kommunizierende Verbindung zwischen dem Abgaskanal 4 und dem Frischluftkanal 2. Die Kopplungseinrichtung 3 ist dabei erfindungsgemäß zusätzlich zur Aufnahme eines Abgasrückführventils 5 ausgebildet, mit welchem eine Dosierung des rückzuführenden Abgases in den Frischluftstrom erfolgt. Erfindungsgemäß ist darüber hinaus der Abgaskanal 4 derart mit der Kopplungseinrichtung 3 der Sauganlage verbunden, dass eine Wärmeübertragung zumindest erschwert, vorzugsweise nahezu vollständig unterbunden ist. Eine derartige Wärmeentkopplung ist erforderlich, da der Abgaskanal 4 aufgrund der hohen Abgastemperaturen vergleichsweise heiß wird, was zumindest bei länger andauernder Einwirkung auf die aus Kunststoff ausgebildete Kopplungseinrichtung 3 der Sauganlage schädigend wirken könnte.

Um eine Montage des erfindungsgemäßen Saugmoduls 1 zu vereinfachen, weist die Kopplungseinrichtung 3 eine zylinderförmige Aufnahme 6 auf, in welche von der einen Seite aus der Abgaskanal 4 und von der anderen Seite her das Abgasrückführventil 5 eingesteckt werden. Dabei ist insbesondere den Fig. 1 und 3 zu entnehmen, dass der Abgaskanal 4 mit seinem in die Aufnahme 6 der Kopplungseinrichtung 3 einragenden Bereich nirgends in direktem Kontakt mit der aus Kunststoff ausgebildeten Kopplungseinrichtung 3 der Sauganlage tritt, sondern vielmehr unter Bildung eines Ringspalts 7 in die Aufnahme 6 der Kopplungseinrichtung 3 eingesteckt und über einen Kragen 8 an der Kopplungseinrichtung 3 befestigt, insbesondere festgeschraubt, ist. Der Ringspalt 7 umschließt den in die Kopplungseinrichtung 3 der Sauganlage eingreifenden Teil des Abgaskanals 4 vollständig und ist an zumindest einer Stelle zum Frischluftkanal 2 hin offen ausgebildet, so dass eine Belüftung des Ringspalts 7 durch die im Frischluftkanal 2 strömende Frischluft möglich ist.

Wie insbesondere der Fig. 1 zu entnehmen ist, kreuzen sich der Frischluftkanal 2 und der Abgaskanal 4 im Bereich der Kopplungseinrichtung 3 auf unterschiedlichen Ebenen, insbesondere unter einem rechten Winkel. Das Abgasrückführventil 5 ist zumindest mit seinem Ventilsitz 9 in den in die Kopplungseinrichtung 3 hineinragenden Bereich des Abgaskanals 4 eingeschoben, so dass der Abgaskanal 4 durch diesen eingeschobenen Bereich, insbesondere durch den Ventilsitz 9 und einen relativ dazu beweglichen Ventilteller 10 verschließbar ist. Das Abgasrückführventil 5 ist dabei über seinen Ventilsitz 9 und/oder über eine axial dazu beabstandete Außenkontur 11 im Abgaskanal 4 zentriert bzw. bezüglich diesem ausgerichtet. Eine Verbindung des Kragens 8 und damit des Abgaskanals 4 mit der Kopplungseinrichtung 3 erfolgt dabei über eine Schraubverbindung, wobei eine derartige Befestigung auch für die gegenüberliegende Seite, dass heißt für die Befestigung des Abgasrückführventils 5 an der Kopplungseinrichtung 3 denkbar ist. Selbstverständlich können dabei zur Befestigung des Abgaskanals 4 bzw. des Abgasrückführventils 5 an der Kopplungseinrichtung 3 separate Schrauben 12 oder aber auch eine durchgehende Schraube bzw. Schraubstange verwendet werden.

Betrachtet man die Fig. 1 weiter, so kann man erkennen, dass der Abgaskanal 4 in seinem in die Kopplungseinrichtung 3 eingeschobenen Bereich eine Wandungsöffnung 13 mit einem nach außen umgebogenen Kragen 8' aufweist, der berührungslos zumindest teilweise in eine entsprechende Öffnung 14 am Frischluftkanal 2 eintaucht. Der Kragen 8' ist dabei als Strömungsleitelement ausgebildet und lenkt zumindest einen Teil des im Frischluftkanal 2 strömenden Frischluftstrom in den Ringspalt 7 zwischen der Kopplungseinrichtung 3 und dem Abgaskanal 4 um, so dass der Ringspalt 7 zwangsbelüftet und dadurch besonders effektiv gekühlt ist. Gleichzeitig verhindert er ein unerwünschtes Eindringen von heißem Abgas in den Ringspalt 7.

Gegenüberliegend der Öffnung 14 im Frischluftkanal 2 kann darüber hinaus ein Prallelement 15 angeordnet sein, mit welchem eine direkt beaufschlagte Wandung des Frischluftkanals 2 vor dem einströmenden, unter Umständen heißen, Abgas geschützt wird. Selbstverständlich sind dabei auch andere Lösungen denkbar, wie bspw. ein zumindest geringfügig in den Frischluftkanal 2 eintauchender Schnorchel.

Eine Montage des erfindungsgemäßen Saugmoduls 1 ist deutlich vereinfacht, da zunächst lediglich von entgegengesetzten Seiten aus der Abgaskanal 4 in die Kopplungseinrichtung 3 der Sauganlage eingesteckt werden muss, woraufhin anschließend das Abgasrückführventil 5 von der entgegengesetzten Seite aus in die Kopplungseinrichtung 3 und insbesondere in den Abgaskanal 4 eingeschoben werden muss. Dabei taucht das Abgasrückführventil 5 in den Abgaskanal 4 zumindest teilweise ein. Von besonderem Vorteil dürfte jedoch sein, dass das erfindungsgemäße Saugmodul 1 als vorgefertigtes, dass heißt komplett montiertes, dichtgeprüftes Bauteil an ein Montageband angeliefert und dadurch deutlich einfacher weiterverbaut werden kann.

Neben dem Ringspalt 7 sorgt auch eine besondere Verbindung des Abgaskanals 4 mit der Kopplungseinrichtung 3 der Sauganlage für eine Wärmeentkopplung zwischen diesen Bauteilen, was insbesondere gemäß den Fig. 1 und 2 deutlich zu erkennen ist. Im Bereich der Schraubverbindung zwischen dem Kragen 8 des Abgaskanals 4 und der Kopplungseinrichtung 3 ist ein Dicht-/Abstandselement 16 angeordnet, welches vorzugsweise so dimensioniert ist, dass ein direkter Kontakt zwischen dem Kragen 8 und der Kopplungseinrichtung 3 nicht möglich ist. Somit wird hier zwangsweise ein, wenn auch geringer, Luftspalt geschaffen, der ebenfalls für eine Wärmeentkopplung sorgt. Darüber hinaus ist auch noch die Verwendung von speziellen, thermisch entkoppelnden Einlegeteilen 17 (vgl. Fig. 2) denkbar, welche insbesondere eine Wärmeübertragung zwischen der Schraube 12 und der Kopplungseinrichtung 3 der Sauganlage reduzieren.

Von besonderem Vorteil für die einfache Montage des erfindungsgemäßen Saugmoduls 1 ist zudem, dass das Abgasrückführventil 5 nicht gasdicht in den Abgaskanal 4 eingesetzt werden muss, da selbst ein geringer Abgasaustritt in den den Abgaskanal 4 umgebenden Ringspalt 7 keine Emission in die Umgebung bedeutet, da der Ringspalt 7 gegenüber der Umgebung über die Dicht-/Abstandselemente 16 abgedichtet ist, so dass selbst unerwünscht in den Ringspalt 7 eingedrungenes Abgas von dort über die im Ringspalt 7 erfolgende Strömung in den Frischluftkanal 2 und von diesem in die Brennkraftmaschine zur Verbrennung befördert werden kann. Generell sollte das Abgasrückführventil 5 im Abgaskanal 4 gasdicht montiert werden. Eine innere Leckage kann reduziert werden durch ein Verlöten des in die Aufnahme 6 hineinragenden Bereichs des Abgaskanals 4 mit dem Kragen 8 oder eine eingelegte Dichtung. Zwischen dem Abgasrückführventil 5 (vorne im Bereich des Ventilsitz 9) und dem in die Aufnahme 6 hineinragenden Bereichs des Abgaskanals 4 ist ein Passung vorzusehen oder ein Dichtelement einzulegen (z.B. eine Hülse und ein O-Ring).

Die besondere Luftkühlung des Ringspalts 7 erübrigt insbesondere eine bisher in diesem Bereich eingesetzte und sowohl konstruktiv aufwendige als auch teure Wasserkühlung. Eine Spaltweite beträgt hierbei vorzugsweise zumindest 1 mm. Generell kann dabei der Abgaskanal 4, insbesondere im Bereich seines Kragens 8 bzw. seines in die Kopplungseinrichtung 3 hineinragenden Bereich ein- oder zweiteilig ausgebildet sein. Generell kann mit dem erfindungsgemäßen Saugmodul 1 ein bisher in diesem Bereich eingesetztes teures Aluminium-Gussgehäuse eingespart werden, was nicht nur die Herstellungskosten, sondern auch die Wartungskosten reduziert, da das erfindungsgemäße Saugmodul 1 deutlich einfacher zu montieren bzw. zu demontieren ist. Von wesentlichem Vorteil jedoch dürfte sein, dass das hier vorgestellte erfindungsgemäße Saugmodul 1 vorgefertigt werden kann, wodurch insbesondere eine nachfolgende Montage an einer Fertigungsstraße einfacher gestaltet bzw. gestrafft werden kann.

## Patentansprüche

1. Saugmodul (1) mit integrierter Abgasrückführung einer Brennkraftmaschine, vorzugsweise eines Kraftfahrzeugs,
- mit einer Sauganlage, umfassend einen aus Kunststoff ausgebildeten Frischluftkanal (2) und eine ebenfalls aus Kunststoff ausgebildete Kopplungseinrichtung (3),
- wobei über die Kopplungseinrichtung (3) ein Abgaskanal (4) kommunizierend mit dem Frischluftkanal (2) verbunden ist,
- wobei die Kopplungseinrichtung (3) zur Aufnahme eines Abgasrückführventils (5) ausgebildet ist und
- wobei der Abgaskanal (4) derart mit der Kopplungseinrichtung (3) verbunden ist, dass eine Wärmeübertragung zumindest erschwert ist,
**dadurch gekennzeichnet,**
- **dass** sich der Frischluftkanal (2) und der Abgaskanal (4) im Bereich der Kopplungseinrichtung (3) auf unterschiedlichen Ebenen kreuzen, insbesondere orthogonal,
- **dass** der Abgaskanal (4) in seinem in die Kopplungseinrichtung (3) eingeschobenen Bereich eine Wandungsöffnung (13) mit einem nach außen umgebogenen Kragen (8') aufweist, der berührungslos zumindest teilweise in eine entsprechende Öffnung (14) am Frischluftkanal (2) eintaucht,
- **dass** der Kragen (8') als Strömungsleitelement ausgebildet ist und einen Teil eines im Frischluftkanal (2) strömenden Frischluftstroms in einen Ringspalt (7) zwischen der Kopplungseinrichtung (3) und dem Abgaskanal (4) umlenkt.

2. Saugmodul nach Anspruch 1,
**dadurch gekennzeichnet,**
**dass** die Sauganlage als einstückiges oder aus mehreren Teilen zusammengesetztes Kunststoffspritzgussteil ausgebildet ist.

3. Saugmodul nach Anspruch 1 oder 2,
**dadurch gekennzeichnet,**
**dass** die Kopplungseinrichtung (3) der Sauganlage eine zylinderförmige Aufnahme (6) aufweist, in welche von der einen Seite der Abgaskanal (4) und von der anderen Seite das Abgasrückführventil (5) einsteckbar sind.

4. Saugmodul nach einem der Ansprüche 1 bis 3,
**dadurch gekennzeichnet,**
**dass** der Abgaskanal (4) unter Bildung eines Ringspaltes (7) in die Kopplungseinrichtung (3) eingesteckt und über einen Kragen (8) an dieser befestigt ist.

5. Saugmodul nach Anspruch 4,
**dadurch gekennzeichnet,**
**dass** der Ringspalt (7) zum Frischluftkanal (2) hin offen ausgebildet und somit durch diesen belüftet ist.

6. Saugmodul nach einem der Ansprüche 1 bis 5,
**dadurch gekennzeichnet,**
**dass** das Abgasrückführventil (5) mit einem Ventilsitz (9) in den Abgaskanal (4) eingeschoben ist.

7. Saugmodul nach einem der Ansprüche 1 bis 6,
**dadurch gekennzeichnet,**
**dass** das Abgasrückführventil (5) über den Ventilsitz (9) und/oder über eine axial dazu beabstandete Außenkontur (11) im Abgaskanal (4) zentriert ist.

8. Saugmodul nach einem der Ansprüche 1 bis 7,
**dadurch gekennzeichnet,**
**dass** das Abgasrückführventil (5) und der Abgaskanal (4) jeweils getrennt oder über gemeinsame Verbindungsmittel (12) mit der Kopplungseinrichtung (3) verschraubt sind.

9. Saugmodul nach einem der Ansprüche 1 bis 8,
**dadurch gekennzeichnet,**
**dass** im Frischluftkanal (2) im Bereich der Öffnung (14) ein Prallelement (15) angeordnet ist.

10. Saugmodul nach einem der Ansprüche 1 bis 9,
**dadurch gekennzeichnet,**
**dass** die Sauganlage aus Polyamid (PA) oder aus Polypropylen (PP) ausgebildet ist.

## Claims

1. An intake module (1) with integrated exhaust gas recirculation of an internal combustion engine, preferably of a motor vehicle,
- with an intake system, comprising a fresh air channel (2) formed from plastic and a coupling device (3) which is also formed from plastic,
- wherein the coupling device (3) is formed for receiving an exhaust gas recirculation valve (5),
- wherein by means of the coupling device (3), an exhaust gas channel (4) is connected in a communicating manner with the fresh gas channel (2),
- wherein the exhaust gas channel (4) is connected with the coupling device (3) in such a manner that a heat transfer is at least made difficult,
**characterized in**
- **that** the fresh air channel (2) and the exhaust gas channel (4) are crossing, in particular orthogonally, on different levels in the region of the coupling device (3),
- **that** the exhaust gas channel (4) has a wall opening (13) in its region inserted into the coupling device (3), which opening has an outwardly bent collar (8') which penetrates contactless at least partially into a corresponding opening (14) at the fresh air channel (2),
- **that** the collar (8') is formed as flow guiding element and redirects a portion of the fresh air flow flowing in the fresh air channel (2) into the annular gap (7) between the coupling device (3) and the exhaust gas channel (4).

2. The intake module according to claim 1,
**characterized in**
**that** the intake system is a plastic injection molding part formed as one piece or composed of a plurality of parts.

3. The intake module according to claim 1 or claim 2,
**characterized in**
**that** the coupling device (3) of the intake system has a cylindrical receptacle (6) in which the exhaust gas channel (4) can be inserted from one side and the exhaust gas recirculation valve (5) can be inserted from the other side.

4. The intake module according to any one of the claims 1 to 3,
**characterized in**
**that** the exhaust gas channel (4) is inserted into the coupling device (3) thereby forming an annular gap (7) and is fastened to the coupling device by means of a collar (8).

5. The intake module according to claim 4,
**characterized in**
**that** the annular gap (7) is formed open towards the fresh air channel (2) and thus is vented by the same.

6. The intake module according to any one of the claims 1 to 5,
**characterized in**
**that** the exhaust gas recirculation valve (5) is inserted with a valve seat (9) into the exhaust gas channel (4).

7. The intake module according to any one of the claims 1 to 6,
**characterized in**
**that** the exhaust gas recirculation valve (5) is centered in the exhaust gas channel (4) by means of the valve seat (9) and/or by means of an outer contour (11) axially spaced apart therefrom.

8. The intake module according to any one of the claims 1 to 7,
**characterized in**
**that** the exhaust gas recirculation valve (5) and the exhaust gas channel (4) are each screwed separately or by means of common fasteners (12) to the coupling device (3).

9. The intake module according to any one of the claims 1 to 8,
**characterized in**
**that** a baffle element (15) is arranged in the fresh air channel (2) in the region of the opening (14).

10. The intake module according to any one of the claims 1 to 9,
**characterized in**
**that** the intake system is formed from polyamide (PA) or from polypropylene (PP).

## Revendications

1. Module d'aspiration (1) à recyclage intégré des gaz d'échappement d'un moteur à combustion interne, de préférence d'un véhicule automobile,
- avec une installation d'aspiration comprenant un canal d'air frais (2) réalisé en matière plastique ainsi qu'un dispositif de couplage (3) réalisé, lui aussi, en matière plastique,
- dans lequel un canal de gaz d'échappement (4) est relié de manière communicante, via ledit dispositif de couplage (3), au canal d'air frais (2),
- ledit dispositif de couplage (3) étant configuré pour recevoir une soupape de recyclage des gaz d'échappement (5), et
- ledit canal de gaz d'échappement (4) étant relié au dispositif de couplage (3) de telle sorte qu'un transfert de chaleur est au moins rendu plus difficile,
**caractérisé par le fait**
- **que** le canal d'air frais (2) et le canal de gaz d'échappement (4) se coupent, dans la zone du dispositif de couplage (3), à des niveaux différents, en particulier de façon orthogonale,
- **que** ledit canal de gaz d'échappement (4) présente dans sa zone introduite dans le dispositif de couplage (3) une ouverture de paroi (13) ayant une collerette (8') repliée vers l'extérieur qui plonge sans contact, au moins en partie, dans une ouverture correspondante (14) située sur le canal d'air frais (2),
- **que** ladite collerette (8') est réalisée en tant qu'élément à diriger l'écoulement et dévie une partie d'un courant d'air frais qui s'écoule à l'intérieur dudit canal d'air frais (2), dans une fente annulaire (7) située entre ledit dispositif de couplage (3) et ledit canal de gaz d'échappement (4).

2. Module d'aspiration selon la revendication 1, **caractérisé par le fait que** ladite installation d'aspiration est réalisée en tant que pièce moulée par injection en matière plastique faite d'une seule pièce ou constituée par plusieurs pièces.

3. Module d'aspiration selon la revendication 1 ou 2, **caractérisé par le fait que** ledit dispositif de couplage (3) de l'installation d'aspiration présente un logement cylindrique (6) dans lequel on peut introduire ledit canal de gaz d'échappement (4) depuis l'un des côtés et ladite soupape de recyclage des gaz d'échappement (5) depuis l'autre côté.

4. Module d'aspiration selon l'une quelconque des revendications 1 à 3, **caractérisé par le fait que** ledit canal de gaz d'échappement (4) est introduit dans ledit dispositif de couplage (3) en formant une fente annulaire (7) et est fixé sur celui-ci par une collerette (8).

5. Module d'aspiration selon la revendication 4, **caractérisé par le fait que** ladite fente annulaire (7) est réalisée de manière à être ouverte en direction du canal d'air frais (2) et est ainsi aérée par celui-ci.

6. Module d'aspiration selon l'une quelconque des revendications 1 à 5, **caractérisé par le fait que** ladite soupape de recyclage des gaz d'échappement (5) est insérée par un siège de soupape (9) dans ledit canal de gaz d'échappement (4).

7. Module d'aspiration selon l'une quelconque des revendications 1 à 6, **caractérisé par le fait que** ladite soupape de recyclage des gaz d'échappement (5) est centrée dans ledit canal de gaz d'échappement (4) par le siège de soupape (9) et/ou par un contour extérieur (11) espacé axialement par rapport à celui-ci.

8. Module d'aspiration selon l'une quelconque des revendications 1 à 7, **caractérisé par le fait que** ladite soupape de recyclage des gaz d'échappement (5) et ledit canal de gaz d'échappement (4) sont visés avec ledit dispositif de couplage (3) soit chacun séparément soit par l'intermédiaire de moyens d'assemblage (12) communs.

9. Module d'aspiration selon l'une quelconque des revendications 1 à 8, **caractérisé par le fait qu'**un élément déflecteur (15) est disposé à l'intérieur du canal d'air frais (2) au niveau de l'ouverture (14).

10. Module d'aspiration selon l'une quelconque des revendications 1 à 9, **caractérisé par le fait que** ladite installation d'aspiration est réalisée en polyamide (PA) ou en polypropylène (PP).
